# EUROPEAN PATENT APPLICATION

(11) **EP 2 067 508 A1**
(43) Date of publication of application: **10.06.2009**
(21) Application number: 07121905.9
(22) Date of filing: 29.11.2007
(51) Int. Cl.: A63F 13/10

(54) **A method for providing a sensory effect to augment an experience provided by a video game**

(71) Applicant: AMBX UK Limited, Redhill Surrey RH1 1FH (GB)
(72) Inventor: The designation of the inventor has not yet been filed
(74) Representative: Van Velzen, Maaike Mathilde

(57) **Abstract**

An apparatus (100) arranged to generate a control signal (275) and a method for generating a control signal corresponding to a game play event provided by a video game program is described. The control signal is dependent on the identified video game program, on the interpretation of intercepted input data provided by for example a keyboard (400), and on the interpretation of intercepted output data, for example video output data displayed on a LCD display (10). The control signal is provided to an effect device (12, 14, 16, 112) to render sensory effects related to the game play event.

## Description

### FIELD OF THE INVENTION

The invention relates to a method according to the preamble of claim 1. The invention further relates to a program code on a carrier which, when loaded into a computer and executed by a processor causes the processor to carry out the steps of the method. The invention further relates to an apparatus according to the preamble of claim 15 and a real-world representation system comprising the apparatus.

### BACKGROUND OF THE INVENTION

When playing a video game on a personal computer or a game console, the user's experience of the video game consists, in most cases, of the viewing of a simple display device while listening to the associated audio. Since the advent of video games, it has been desired to augment this user experience. A number of ways of achieving this have been proposed, including head mounted displays, surround screen installations and game peripherals such as rumble pads. The object of these functional improvements has been to increase the user's immersion in the virtual game world.

International Patent Application Publication WO 02/092183 describes a real world representation system and language in which a set of devices are operated according to a received real world description, and hence render a "real world" experience in the ambient environment of the user. The real-world description is in the form of an instruction set of a markup language that communicates a description of physical environments and the objects within them, their relationship to the user, each other, and to the physical space of the user's ambient environment. For example, the real world experience may be rendered by effect devices such as lighting devices that project colored light onto the walls of the user's private dwelling, fan devices that simulate wind within the dwelling, or "rumble" devices that are embedded into the user's furniture to cause the user to feel vibrations. Hence an ambient immersive environment is created, which is flexible, scalable and provides an enhanced experience to a user.

To effectively augment the user's experience of the video game, the effect devices such as lighting devices, fan devices, rumble devices etc. generate the real world effects that together create a real world experience. These real world effects must be in close synchronicity with game play events happening in the virtual game world. For example, if a lightening flash occurs in the virtual game world, the flash should immediately be reflected by the effect devices (e.g. by pulsing a light-producing device). Hence changes in the virtual game world must be reflected by immediate changes in the effect scripts that are generated to operate the effects devices.

The aforementioned real world representation systems usually involve a scripting language interpreted by middleware, which then relays the appropriate commands to the effects devices through device drivers or a hardware abstraction layer (HAL) for example. Such systems require a high level descriptive script or ambient script that is associated with the virtual game world, and game play events therein, to be "built into" the virtual game world. For example, the user's character in the virtual video game world may be standing in a forest on a summers evening, and so an ambient script comprising the real-world description might read <FOREST>, <SUMMER>, <EVENING>. This real-world description may be interpreted into specific instructions or effect scripts for rendering effects devices in the user's ambient environment, such as to give a color tone of a pleasant green and a light level of low but warm, thereby rendering a 'real world' experience in the ambient environment.

In essence, the ambient script comprising the real world description must be incorporated at the time of authoring in the source code for the video game. Such direct authoring enables sophisticated and synchronized sensory effects, according to the authors' creative view on the mood and feeling that should be projected, to occur at particular points or game play events within the video game.

In practice access to the source code of a commercial video game may not be possible. An addition of an ambient script to a video game requires involvement of game developers and publishers and may not be commercially attractive for video games that were already released.

It is therefore a disadvantage that for video games that were not authored together with an ambient script with known method no ambient immersive environment can be created, as there are no effect scripts to operate and control the effects devices.

### SUMMARY OF THE INVENTION

It is therefore an object of the invention to provide a sensory effect to augment an experience provided by a video game that was not authored together with an ambient script.

This object is achieved with the method for providing a sensory effect to augment an experience provided by a video game corresponding to the characterizing portion of claim 1.

When playing a video game a user playing the game interacts with the entertainment system. The interaction requires output devices such as for example an LCD screen and speakers to present the course of the game and provide feedback to the user. The video game being played is identified as the video game provides a context for the interpretation of the (for example audio visual) output data being fed back to the user. To enable said interpretation the output data provided by the entertainment system is being intercepted. After interpreting the intercepted output data in the context of the identified video game the sensory effect to be provided to augment the experience is determined and the control signal for the effect device is generated. Thus for a video game that was not authored together with an ambient script a sensory effect that augments the experience provided by a video game is provided, thereby achieving the object of the invention.

In a further embodiment of the method an ambient script is generated in response to the interpreting of the intercepted output data in the context of the identified video game. The ambient script describes the sensory effects to be generated by one or more effect devices.

In a further embodiment of the method output devices such as for example force feedback devices that are coupled to the entertainment system are detected.

When playing a video game a user playing the game interacts with the entertainment system. The interaction may further require data input devices by which the user can provide input data to the entertainment system or the video game. Therefore in a further embodiment of the method input data provided by the user is intercepted. The identified video game being played provides a context for the interpretation of the intercepted input data. After interpreting the intercepted input and output data and in the context of the identified video game the sensory effect to be provided to augment the experience is determined and the control signal or an ambient script for the effect device is generated.

Examples of data input devices are a keyboard, a joystick and a mouse. A user playing the video game may choose options using the keyboard or the mouse and control a character in the game using the joystick. Therefore in a further embodiment of the method the game configuration file corresponding to the identified video game is determined. Said game configuration file may comprise a plurality of key bindings. With the game configuration file the intercepted input data provided by the user is given a meaning that is by comparing the input data received from for example a keyboard with a plurality of options as listed in the game configuration file a selected option may be determined.

Examples of entertainment systems are a game console and a PC. In a further embodiment of the method the video game is being loaded into a PC and executed on a processor comprised in the PC. In this embodiment the video game is being identified using a detoured function call. For example on a PC with Windows operating system the title and the execution path of the video game may be determined with a detoured function call.

Each video game has its own game intro. Said game intro comprises video data shown on a display device and audio data that characterized said video game. Therefore in a further embodiment the video game may be identified by comparing a video or audio fingerprint taken from the game intro with a predetermined video or audio fingerprint.

Examples of output devices are a display and a joystick with force feedback.

In a further embodiment of the method the output data provided by the entertainment system and received by the display device is intercepted. Preferably a portion of the output data is intercepted providing the advantage that further processing of said portion will have a reduced influence on the performance of the entertainment system during the execution of the video game program. To interpret said intercepted output data the graphical data corresponding to a predetermined area of a displayed screen shown on the display device is captured. For the interpretation the video game needs to be identified, which method step for example provides the entertainment system the title of a specific racing video game. In said racing video game a speed indicator in the lower right corner of the displayed screen may be shown. Only that part of the intercepted output data corresponding to the predetermined area of the displayed screen comprising the speed indicator is taken for the interpretation. In this example as a result of the interpretation the speed is obtained. Next a control signal for an effect device such as for example a fan is generated. The control signal may be dependent on the interpretation of the intercepted input data, such as for example the selected car, and the interpretation of the intercepted output data, corresponding to the actual speed of the car. In this example the fan provides a sensory effect of wind to augment the experience of driving fast, the experience being provided by said video racing game.

With the apparatus as defined in claim 15 and an effect device a real world representation system is obtained. With said system the user is able to 'upgrade' his experience of the video game.

Further optional features will be apparent from the following description and accompanying claims. Embodiments of the invention will now be described, by way of example only, with reference to the accompanying drawings.

### BRIEF DESCRIPTION OF THE DRAWINGS

In the drawings:
Fig. 1 shows schematically a real world representation system,
Fig. 2 illustrates a method for providing a sensory effect to augment an experience provided by a video game,
Fig. 3 shows schematically an apparatus arranged to generate a control signal.

### DETAILED DESCRIPTION OF THE EMBODIMENTS

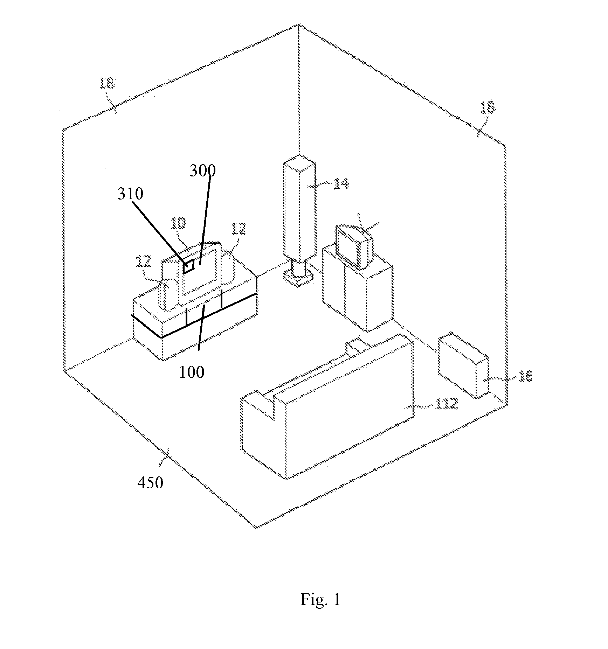

Figure 1 illustrates an embodiment of a real world representation system 450 that comprises a computer or game console 100 with display device 10 and a set of effects devices 12, 14, 16, 112 including for example, audio speakers 12, a lighting device 14, a heating or cooling (fan) device 16 and a rumbling device 112 that is arranged to shake the couch. An effect device may provide more than one real world effect. Each speaker 12 in the system of Fig. 1 for example may also include a lighting device for coloring the wall behind the display device 10. The effect devices may be electronic (such as for example a light source) or they may be a mix of mechanical and electronic components (such as for example a fan). The effects devices are interconnected by either a wireless network or a wired network such as a powerline carrier network. The computer or game console 100 in this embodiment of the real world representation system 450 enables video gaming and the set of effect devices 12, 14, 16, 112 augment a virtual game world provided by the video game by adding real world effects such as for example light, sound, heat or cold, wind, vibration, etc. to the displayed screen images 300 that are in close synchronicity with the game play events in the virtual game world.

At least one of the effects devices 12, 14, 16, 112 making up the real world representation system 450 is arranged to receive an effect script in the form of an instruction set of a mark-up language (although other forms of script may also be employed by the skilled person) and the effects devices 12, 14, 16, 112 are operated according to said effect script. In this example, the effect script causes the effects devices to augment the experience of a video game that a user is playing on the computer or game console 100.

In an other embodiment an effect device is arranged to receive a signal and is arranged to be operated according to said signal. Said signal may for example comprise instructions that are specific for that effect device: a fan (as an example of an effect device) may receive only instructions relating to its fan speed whereas a light providing device (as a further example of an effect device) may receive instructions relating to a color and brightness that has to be provided by said light device.

When the code of the video game being executed by the computer or game console 100 does not have ambient scripts embedded in its video game program no real world effects from the effects devices 12, 14, 16, 112 will be generated in response to game play events that result from a user interacting with the video game (or playing the video game). However, with the method for providing a sensory effect to augment an experience provided by a video game real world effects may be generated in the room 18, even when no ambient script has been embedded in the video game.

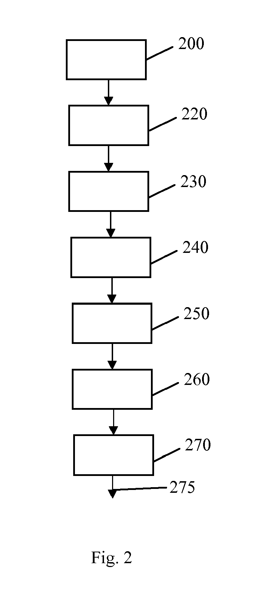

Fig. 2 illustrates a method for providing a sensory effect to augment an experience provided by a video game. The video game may be provided for example on a data carrier such as for example a CD or DVD or via the Internet. The video game comprises a program code that is being executed on a processor that is comprised in the entertainment system. The entertainment system may be coupled to an effect device arranged for providing the sensory effect. Examples of these effect devices are a fan providing the sensory effect of wind, an infrared lamp providing the sensory effect of heat, and a rumbler device providing the sensory effect of vibration. The method is characterized in comprising
- a step 200 in which the video game is identified;
- a step 220 in which an output data device coupled to the entertainment system is detected;
- a step 230 in which input data provided by a data input device is intercepted;
- a step 240 in which output data provided by the entertainment system is intercepted;
- a step 250 in which the intercepted input data is interpreted;
- a step 260 in which the intercepted output data is interpreted;
- a step 270 in which a control signal or an ambient script for an effect device is generated, said control signal being dependent on the interpretation of the intercepted input data, the interpretation of the intercepted output data and the identified video game.
   In a further embodiment of the method the sequence of some of the steps 200-260 may have changed. Preferably for the interpretation of the intercepted data the video game is identified. In a further embodiment some of the steps may be omitted. For example the step of detecting an output data device coupled to the entertainment system may be omitted. In an other example also the steps of intercepting and interpreting the input data are omitted.
   By applying the method a control signal or an ambient script may be generated by which effect devices are controlled resulting in sensory effects that augment the video game.
   In step 200 the video game that has been loaded in the entertainment system is identified. A video game is a game that involves interaction with a user by means of a user interface and generates feedback on at least a display device, such as for example a LCD screen. Examples of entertainment systems are personal computers and video game consoles.
   Various methods can be used to identify the video game that has been started and of which the corresponding program code is being run on the processor. In a first embodiment of the method the entertainment system comprises a PC with a Windows operating system wherein a function call such as for example a Idirect3DswapChain9 call of a DirectX9 call is detoured (see for instance http://research.microsoft.com/sn/detours/). Within the detoured function, the window title and the execution path of the game are determined. Each video game has its own video game intro, with its own audio-visual characteristics. For example in the game intro predetermined scenes from the video game may be shown while music is being played. These predetermined scenes or said music, or a combination of both may be used to identify the video game. Therefore in a further embodiment of the method the audio-visual characteristics of the video game intro are used to identify the video game. The audio-visual characteristics of the video game intro may be determined using video and/or audio fingerprinting of the video game intro. On a PC with a Windows operating system this may be done by using detouring or by accessing video data that may be provided by the video card. On a game console the audio-visual characteristics of the video game intro may be determined by applying audio/video grabbing. On a PC with a Windows operating system the video game may be started from Windows directly but also indirectly by another application, referred to as a wrapper application. This wrapper application starts the video game. In a further embodiment of the method a wrapper application is used to start the video game. When the wrapper application is used, it is also known which video game is started, and thus the wrapper application may be used to identify the video game.
   Various types of data input devices may be coupled to the entertainment system. The data input device is used to interact with the video game program and manipulate game play events. The data input device may for example be a button and a joystick, or feature a dozen of buttons and two or more joysticks. Other examples of data input devices are a keyboard and a mouse.
   In step 220 a force feedback output data device coupled to the entertainment system is identified. The video program provides feedback to the player of the video game. This feedback may for example comprise audio-visual and haptic data. Examples of force feedback output data devices are joysticks and steering wheels. For force feedback devices it needs to be checked real time whether they are coupled to the entertainment system by for example detouring of a DirectInput or Xinput function call. When there are no force feedback devices coupled to the entertainment system their presence may be emulated to make sure that the video game generates force feedback output data. The force feedback data may relate to a specific game play event.
   In step 230 input data provided by the data input device is intercepted. Preferably a portion of the input data is intercepted to reduce the processor load of the entertainment system. In an embodiment of the method the entertainment system comprises a PC with a windows operating system and the input data may comprise keyboard strokes and mouse clicks. By installing a hook (see also http://msdn2.microsoft.com/en-us/library/ms644959.aspx) the keyboard strokes and mouse clicks can be intercepted. A hook is a point in a system message handling mechanism where an application can install a subroutine to monitor the message traffic in the entertainment system and process certain types of messages before the target window procedure. With the hook keyboard strokes and mouse clicks in the message traffic may be detected and intercepted. This allows an interpretation of the keyboard strokes and mouse clicks before they are actually provided as input data to the video game program. In a further embodiment the input data of input data devices is intercepted by detouring a DirectInput function call.
   In the step 240 output data provided by the entertainment system or the video game is intercepted. Preferably only a portion of the output data is intercepted to reduce the processor load of the entertainment system. The output data comprises video output data, sound output data and force feedback output data. In an embodiment of the method the entertainment system comprises a PC with a windows operating system and the video output data is intercepted by detouring a DirectX function call. DirectX (or Microsoft Direct eXtension) is a collection of application programming interfaces (also referred to as APIs) for handling tasks related to multimedia, especially video game programming and video. DirectX comprises for example DirectDraw, Direct3D, DirectInput and DirectSound. In an other example the video data is intercepted by detouring an OpenGL function call. Whereas DirectX relates to a Microsoft standard OpenGL relates to an open standard. In a further example the interception is realized with a function call causing a predetermined part of the video output data provided by a video card to be copied to a memory. In a further embodiment the sound output data is intercepted by detouring a DirectSound function call. In a further embodiment the force feedback output is intercepted by detouring a DirectInput function call. In yet a further embodiment of the method hardware may be added to the entertainment system. The hardware is adapted to convert the analogue audio-visual data to corresponding digital audio-visual data, and provides this digital audio-visual data to the entertainment system. Examples of this hardware are a video grabber and an audio digitizer. Such a video grabber may for example be an extension card that is plugged in a PC slot.
   In step 250 the intercepted input data is interpreted. In an embodiment of the method a game configuration file corresponding to the identified video game is analyzed. Key bindings in the configuration file may be compared with the semantics of keyboard keys and mouse button clicks. In a further embodiment the semantics of keyboard keys and mouse button clicks is interpreted using a priori knowledge relating to the identified video game. As an example in a shooter game a 'left mouse button down event' may indicate that a weapon is being fired. As further example a combination of the keyboard keys 'shift' and 'A' may indicate that a character in the video game is running. In yet a further example the pressing of the '1' key on the keyboard may indicate a change to a specific weapon. In a further embodiment the step of interpreting the intercepted input data comprises the steps of
- selecting a portion of the input data
- analyzing the selected portion of the input data
   As previously discussed in an example combination of keystrokes may have a predetermined meaning in a video game. Therefore only keystroke combinations may be selected from the input data and analyzed.
   In step 260 the intercepted output data is interpreted. In an embodiment of the method the step of interpretation of the intercepted output data comprises the steps of
- selecting a portion of the output data
- analyzing the selected portion of the output data The output data comprises video output data, sound output data and force feedback output data. As the video game has been identified there is a priori knowledge available to select portions of the output data. For example in a video game relating to a racing car dials, alphanumeric values, status bars and indicators may be available on the screen to inform the player of the game on his speed, his fuel level, the gear, etc. The portions of the video output data that relate to the dials, alphanumeric values, status bars and indicators shown on the screen are selected and analyzed to obtain the speed of the car, and the gear being used.

In a further embodiment of the method the step of interpretation of the intercepted output data further comprises the step of filtering the selected portion of the output data. For example dials and indicators may be performed as semitransparent overlays on the screen, where the background image then creates a disturbance on the dials and indicators. In a further example peak or envelope detection is used to filter the sound output data to determine whether the occurrence of an explosion.

In a further embodiment of the method the sound output data is analyzed for the presence of predetermined patterns. For example the presence of localized bursts of sound pulses may indicate a rattling machine gun.

In a further embodiment of the method force feedback output data resulting from a force feedback function call by a video game is monitored to detect a game play event. In a racing video game the force feedback output data may indicate the crashing of a car whereas in a one person shooter game the force feedback output data may indicate that the character that is representing the player is being hit.

In step 270 the control signal 275 or the ambient script for the effect device is generated. The control signal is dependent on the interpretation of the intercepted input data, the interpretation of the intercepted output data and the identified video game. In a further embodiment of the method an ambient script is generated in dependence of the interpretation of the intercepted input data, the interpretation of the intercepted output data and the identified video game. As an example in a racing game portions of the video output data that relate to the dials, alphanumeric values, status bars and indicators shown on the screen are selected and analyzed to obtain the speed of the car. A control signal for a fan is generated, the fan generating a wind that is dependent on the obtained speed of the car. A further control signal for wrist rumbler may be provided to give the player the sensation of the vibration of a speeding car. In a further example the generation of the control signal is dependent on the combination of the interpretation of for example intercepted sound data and video data. For instance a burst of light may indicate several game play events, whereas the combination of a burst of light and a loud noise indicate an explosion.

A video game for which no ambient script has been authored may be analyzed to provide knowledge on what input data it requires, or what output data it generates. This analysis may be done 'off-line', meaning that it will not be done when a user plays the video game. Once the video game has been identified said knowledge may be used to look for specific input data (such as for example specific key stroke combinations) being provided to the video game when the video game is actually being played by the user. With said knowledge it is known on beforehand what portion of the input data must be intercepted. It may also be determined 'off-line' what game play events are provided by the video game, and for each of those game play events an ambient script may be authored, or a set of one or more control signals may be determined. When the video game is being played by the user the interpretation of an intercepted portion of the input data provides a corresponding game play event. For said corresponding game play event the corresponding ambient script or set of control signals may be obtained (for example by using a lookup table).

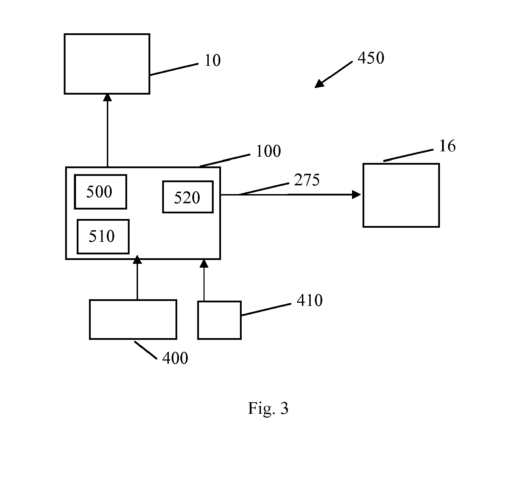

Fig. 3 illustrates a real world representation system 450 comprising an apparatus 100 such as for example a computer or a game console that is adapted to generate an ambient script (describing the effects to be generated by at least one effect device) or a control signal 275. The ambient script or control signal 275 is provided to an effect device 16, also comprised in the real world representation system 450, and the effect device 16 is operated in dependence of said ambient script or control signal. Examples of effect devices are audio speakers, a lighting device, a heating or cooling (fan) device and a rumbling device. The effect devices augment a user's experience of a game play event, said game play event being dependent on the execution of a video game program that is stored in a memory 500 which is comprised in the apparatus, the video game program being executed on a processor 510 also comprised in the apparatus 100. A user interacting with the video game provides input data to the apparatus 100. This input data may be given using a keyboard 400, mouse, force feedback joystick 410 or the like. The apparatus 100 may have display means or may be connected to a display 10 such as for example a LCD screen. The apparatus 100 further comprises communication means 520 to provide a determined ambient script or generated control signal to the effect device 16 and comprises further communication means to exchange data using the internet. The apparatus may further comprise data exchange means such as for example a DVD drive, CD drive or USB connector to provide access to a data carrier. The video game may be down loaded from the internet or retrieved from the data carrier such as for example a DVD. The apparatus 100 is adapted to identify the video game, identify the output data device 410 coupled to the apparatus, intercept input data provided by the data input device, intercept the output data provided by the apparatus, interpret the intercepted input data, interpret the intercepted output data and generate the control signal or ambient script for the effect device in response to the interpretation of the intercepted input data and the interpretation of the intercepted output data. The apparatus may comprise hardware adapted for video grabbing or audio digitizing.

Summarizing the invention relates to an apparatus 100 arranged to generate a control signal or ambient script and a method for generating a control signal or ambient script corresponding to a game play event provided by a video game program. The control signal is dependent on an identified video game program, on an interpretation of intercepted input data provided by for example a keyboard, and on an interpretation of the intercepted output data, for example video output data displayed on an LCD display. The control signal or ambient script is provided to an effect device 12, 14, 16, 112 to render sensory effects related to the game play event.

## Claims

1. A method for providing a sensory effect to augment an experience provided by a video game, the video game being executed on a processor comprised in an entertainment system, the entertainment system comprising an effect device arranged for providing the sensory effect, the method being **characterized in** comprising
- a step (200) in which the video game is identified;
- a step (240) in which output data provided by the entertainment system is intercepted;
- a step (260) in which the intercepted output data is interpreted;
- a step (270) in which a control signal for an effect device is generated, said control signal being dependent on the interpretation of the intercepted output data and the identified video game.

2. A method according to claim 1 further comprising
- a step (220) in which an output data device coupled to the entertainment system is detected.

3. A method according to claim 1 or 2 further comprising
- a step (230) in which input data provided by a data input device is intercepted;
- a step (250) in which the intercepted input data is interpreted; the control signal being further dependent on the interpretation of the intercepted input data.

4. A method according to any one of claims 1 to 3 wherein the step of interpreting the intercepted output data comprises selecting a portion of the output data.

5. A method according to claim 3 wherein the step of interpreting the intercepted input data comprises selecting a portion of the input data.

6. A method according to claim 4 wherein the step of interpreting the intercepted output data further comprises filtering said portion of the output data.

7. A method according to claim 5 wherein the step of interpreting the intercepted input data further comprises filtering said portion of the input data.

8. A method according to any one of claims 1-7 wherein the step (200) of identifying the video game comprises determining a title of the video game with a detoured function call.

9. A method according to any one of claims 1-7 wherein the step (200) of identifying the video game comprises the further steps of
- determining an audio or video fingerprint of a video game intro comprised in the video game;
- comparing said audio or video fingerprint with a predetermined audio or video fingerprint.

10. A method according to claim 3 wherein in the step (230) in which input data provided by the data input device is intercepted comprises the intercepting of input data with a detoured DirectInput function.

11. A method according to any one of claims 1-8 wherein in the step (240) in which output data is intercepted comprises the intercepting of the output data with a detoured function from a group comprising DirectX, DirectSound, DirectInput, OpenGL.

12. A method according to claim 3 or 5 wherein the step (250) in which the intercepted input data is interpreted comprises the further steps of
- determining a game configuration file corresponding to the identified video game, the game configuration file comprising a plurality of key bindings;
- comparing the intercepted input data provided by a device from the group comprising keyboard, mouse, joystick with the plurality of key bindings.

13. A method according to anyone of claims 1-12 wherein the step (270) in which a control signal for an effect device is generated comprises the further steps of
- determining a game play event, the game play event being dependent on the interpretation of the intercepted input data and the interpretation of the intercepted output data;
- determining a sensory effect corresponding to said game play event;
- providing a control signal corresponding to said determined sensory effect.

14. Program code on a carrier which, when loaded into a computer (100) and executed by a processor comprised in the computer causes the processor to carry out the steps of any one of method claims 1-7.

15. An apparatus (100) arranged to generate a control signal (275), said control signal being arranged to operate an effect device (16) to augment a video game program with a sensory effect, the apparatus comprising:
- a memory (500) arranged to store the video game program,
- a processor (510) arranged to execute the video game program,
- communication means (520) arranged to provide the generated control signal to the effect device, the apparatus (100) being **characterized in** further comprising
- means to intercept the output data provided by the apparatus; the apparatus being adapted to
- identify the video game program;
- generate the control signal for the effect device in response to an interpretation of intercepted input data provided by a data input device (400, 410) and an interpretation of intercepted output data and the identified video game.

16. A real world representation system (450) comprising the apparatus (100) according to claim 15 and at least one effect device (16).
